# EUROPEAN PATENT APPLICATION

(11) **EP 2 469 957 A1**
(43) Date of publication of application: **27.06.2012**
(21) Application number: 10809928.4
(22) Date of filing: 13.08.2010
(51) Int. Cl.: H04W 74/02, H04W 72/12, H04W 72/14

(54) **MOBILE COMMUNICATION METHOD AND MOBILE STATION**

(30) Priority: 17.08.2009 JP 2009188791
(71) Applicant: NTT DOCOMO, Inc., Chiyoda-ku Tokyo 100-6150 (JP)
(72) Inventor: IWAMURA, Mikio, Tokyo 100-6150 (JP); ABETA, Sadayuki, Tokyo 100-6150 (JP)
(74) Representative: HOFFMANN EITLE
(86) International application number: PCT/JP2010/063762
(87) International publication number: WO 2011/021583

(57) **Abstract**

A mobile communication system according to the present invention includes: a step A in which a radio base station eNB transmits an uplink scheduling grant including CB-RNTI; and a step B in which when the uplink scheduling grant has been received, according to a comparison result obtained by comparing a predetermined threshold value with the amount of uplink data remaining in the transmission buffer, the mobile station UE determines whether a protocol data unit formed by the uplink data can be transmitted using a shared uplink resource specified by the uplink scheduling grant.

## Description

### TECHNICAL FIELD

The present invention relates to a mobile communication method and a mobile station.

### BACKGROUND ART

The Standards Determination Committee for LTE (Long Term Evolution) -Advanced schemes has proposed adaptation of a contention-based uplink transmission control method using "Contention Based Grant" (see Non-Patent Document 1). A contention-based uplink transmission control method using the "Contention Based Grant" will be simply described below.

Firstly, in addition to an uplink scheduling grant transmitted through PDCCH (Physical Downlink Control Channel) addressed to C-RNTI (Cell-Radio Network Temporary Identity) of a mobile station UE, the mobile station UE can monitor and receive an uplink scheduling grant transmitted though the PDCCH addressed to CB-RNTI (Contention Based-Radio Network Temporary Identity).

Secondly, when the mobile station UE has received an uplink scheduling grant transmitted though PDCCH addressed to CB-RNTI, an uplink data signal is transmitted through PUSCH (Physical Uplink Shared Channel) using TF (Transmission Format), MCS (Modulation and Code Scheme), RB (Resource Blocks) or the like that are designated by the uplink scheduling grant.

The mobile station UE adds "MAC CE (Control Element)" including the C-RNTI of the mobile station UE to the uplink data signal to enable identification of by whom the uplink data signal has been transmitted.

As a result, application of the contention-based uplink transmission control method using the "Contention Based Grant" is expected to be capable of a reduction in transmission delay of the uplink data signal by enabling omission of the L2 procedure of "transmission of scheduling request by mobile station UE" → "transmission of uplink scheduling grant by radio base station eNB", → "transmission of buffer status report by mobile station UE", → "transmission of uplink scheduling grant by radio base station eNB", → "transmission of uplink data signal by mobile station UE".

Application of contention-based uplink transmission control method using "Contention Based Grant" is expected to be capable of effective application to uplink resources that are not used after normal scheduling addressed to the C-RNTI.

### SUMMARY OF THE INVENTION

### PROBLEMS TO BE SOLVED BY THE INVENTION

However, the collision-type uplink transmission control method using the "Contention Based Grant" which has currently been examined has a problem in that a probability of the collision of the uplink data signal may be increased or an interference amount of the uplink data signal may be increased due to an increase in the number of mobile stations UE which transmit the uplink data signal to the uplink scheduling grant transmitted via the PDCCH addressed to the same CB-RNTI.

Furthermore, the collision-type uplink transmission control method using the "Contention Based Grant" has another problem in that since it is not possible to recognize by which mobile station UE at a particular position the uplink data signal is to be transmitted, the radio base station eNB selects TF or MCS based on quality for a mobile station UE located at the end of the cell, and transmits only an uplink signal with a small data amount, resulting in the occurrence of inefficiency.

Furthermore, the collision-type uplink transmission control method using the "Contention Based Grant" has a problem in that when the uplink signal is transmitted by the mobile station UE, in which a sufficient amount of uplink data does not exist in a transmission buffer, with respect to TF designated by the uplink scheduling grant transmitted via the PDCCH addressed to the same CB-RNTI, most of PDUs (Protocol Data Units) constituting the uplink data signal are filled with padding, so that throughput may deteriorate.

Therefore, the present invention has been achieved in view of the above-described problems, and an object thereof is to provide a mobile communication method and a mobile station, by which it is possible to solve the problems in the collision-type uplink transmission control method using the "Contention Based Grant" as described above.

### MEANS FOR SOLVING THE PROBLEM

A first characteristic of the present invention is summarized as a mobile communication method comprising, a step A in which a radio base station transmits an uplink scheduling signal including predetermined identification information which is not identification information of a specific mobile station, and a step B in which when the uplink scheduling signal has been received, according to a comparison result obtained by comparing a predetermined threshold value with an amount of uplink data remaining in a transmission buffer, a mobile station determines whether a protocol data unit formed by the uplink data can be transmitted using a shared uplink resource designated by the uplink scheduling signal.

A second characteristic of the present invention is summarized as a mobile station comprising a determination unit configured to, when an uplink scheduling signal including predetermined identification information that is not identification information of a specific mobile station is received from a radio base station, determine whether a protocol data unit formed by uplink data can be transmitted using a shared uplink resource designated by the uplink scheduling signal, according to a comparison result obtained by comparing a predetermined threshold value with an amount of the uplink data remaining in a transmission buffer.

### EFFECT OF THE INVENTION

As described above, according to the present invention, it is possible to provide a mobile communication method and a mobile station, by which it is possible to solve the problems in the collision-type uplink transmission control method using the "Contention Based Grant" as described above.

### BRIEF DESCRIPTION OF THE DRAWINGS

[Fig. 1] Fig. 1 is an entire configuration diagram of a mobile communication system according to a first embodiment of the present invention.
[Fig. 2] Fig. 2 is a functional block diagram of a mobile station according to the first embodiment of the present invention.
[Fig. 3] Fig. 3 is a sequence diagram illustrating the operation of the mobile communication system according to the first embodiment of the present invention.
[Fig. 4] Fig. 4 is a sequence diagram illustrating the operation of the mobile communication system according to a first embodiment of the present invention.

### BEST MODES FOR CARRYING OUT THE INVENTION

### (Configuration of mobile communication system according to first embodiment of the present invention)

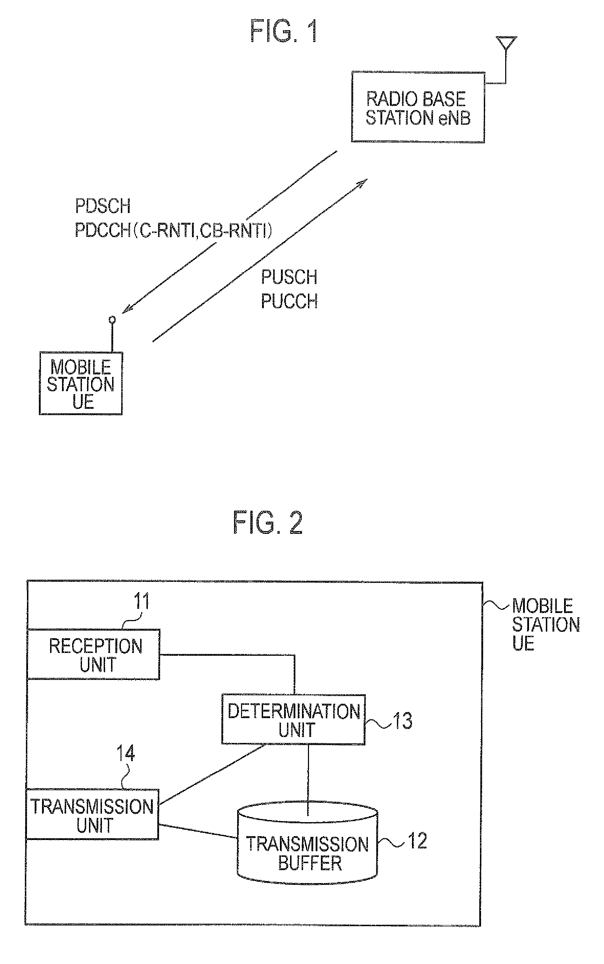

With reference to Fig. 1 and Fig. 2, the configuration of the mobile communication system according to the first embodiment of the present invention will be described.

The mobile communication system according to the present embodiment is an LTE-Advanced mobile communication system that is configured to apply a contention-based uplink transmission control method using "Contention Based Grant" in relation to a mobile station UE that maintains an uplink synchronous state.

As illustrated in Fig. 1, the mobile communication system according to the present embodiment is configured so that a mobile station UE transmits an uplink data signal through PUSCH to a radio base station eNB, and transmits an uplink control signal through PUCCH (Physical Uplink Control Channel).

Meanwhile, in the mobile communication system according to the present embodiment, the radio base station eNB is configured to transmit a downlink data signal to the mobile station UE through PDSCH (Physical Downlink Shared Channel) and transmit a downlink control signal to the mobile station UE through PDCCH.

As illustrated in Fig. 2, the mobile station UE includes a reception unit 11, a transmission buffer 12, a determination unit 13, and a transmission unit 14.

The reception unit 11 is configured to receive broadcast information, an RRC message, a downlink control signal and the like, which are transmitted from the radio base station eNB.

For example, the reception unit 11 is configured to receive, as a downlink control signal, an uplink scheduling grant transmitted via the PDCCH addressed to the C-RNTI of the mobile station UE, in other words, an uplink scheduling grant (an uplink scheduling signal) including the C-RNTI of the mobile station UE via the PDCCH.

Furthermore, the reception unit 11 is configured to receive, as the downlink control signal, an uplink scheduling grant transmitted via the PDCCH addressed to CB-RNTI, in other words, an uplink scheduling grant (uplink scheduling signal) including the CB-RNTI.

The CB-RNTI is predetermined identification information that is not CRNTI for a specific mobile station UE, and may be designated by broadcast information by the radio base station eNB, or may be designated by separate signaling by the radio base station eNB (for example, an RRC message).

The transmission buffer 12 is a buffer that houses uplink data to be transmitted via the PUSCH.

The determination unit 13 is configured to determine whether it is possible to transmit a protocol data unit formed by uplink data using a shared uplink resource designated by the uplink scheduling grant including the CB-RNTI according to a comparison result obtained by comparing the amount of the uplink data remaining in the transmission buffer with a predetermined threshold value.

Here, since the uplink scheduling grant including the CB-RNTI designates the uplink resource that can be used by a plurality of mobile stations UE, an uplink resource designated by the uplink scheduling grant will be referred to as a "shared uplink resource" in the present specification.

Meanwhile, since the uplink scheduling grant including the C-RNTI of a specific mobile station UE designates an uplink resource that can be used only by the mobile station UE, an uplink resource designated by the uplink scheduling grant will be referred to an "individual uplink resource" in the present specification.

In addition, the determination unit 13 may be configured to calculate a predetermined threshold value based on at least one of TF (Transmission Format) and MCS (Modulation and Code Scheme) designated by the uplink scheduling grant including the CB-RNTI or may be configured to use a predetermined threshold value designated by the radio base station eNB.

Here, parameters necessary for calculating the above-described predetermined threshold value may be set in advance by "RRC Reconfiguration (an RRC message)" and the like.

For example, only when the amount of uplink data remaining in the transmission buffer is equal to or more than the predetermined threshold value, the determination unit 13 may be configured to determine that the protocol data unit formed by the uplink data can be transmitted using the shared uplink resource designated by the uplink scheduling grant including the CB-RNTI.

In addition, the predetermined threshold value may include a threshold value #1 (a first threshold value) and a threshold #2 (a second threshold value). In this case, for example, only when the amount of uplink data remaining in the transmission buffer is equal to or more than the threshold value #1 and is less than the threshold value #2, the determination unit 13 may be configured to determine that the protocol data unit formed by the uplink data can be transmitted using the shared uplink resource designated by the uplink scheduling grant including the CB-RNTI.

Moreover, only when the amount of padding in the protocol data unit formed by the uplink data remaining in the transmission buffer is smaller than the predetermined threshold value, the determination unit 13 may be configured to determine that the protocol data unit can be transmitted using the shared uplink resource designated by the uplink scheduling grant including the CB-RNTI.

The transmission unit 14 is configured to transmit the uplink data signal, the uplink signal, and the like to the radio base station eNB.

For example, the transmission unit 14 is configured to transmit the uplink data signal including the protocol data units determined to be transmittable by the determination unit 13 to the radio base station eNB via the PUSCH using the shared uplink resource designated by the uplink scheduling grant including the CB-RNTI.

### (Operation of mobile communication system according to first embodiment of present invention)

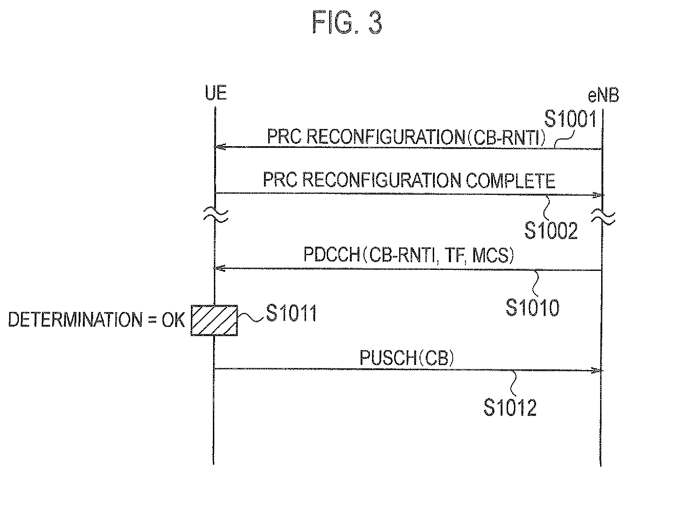

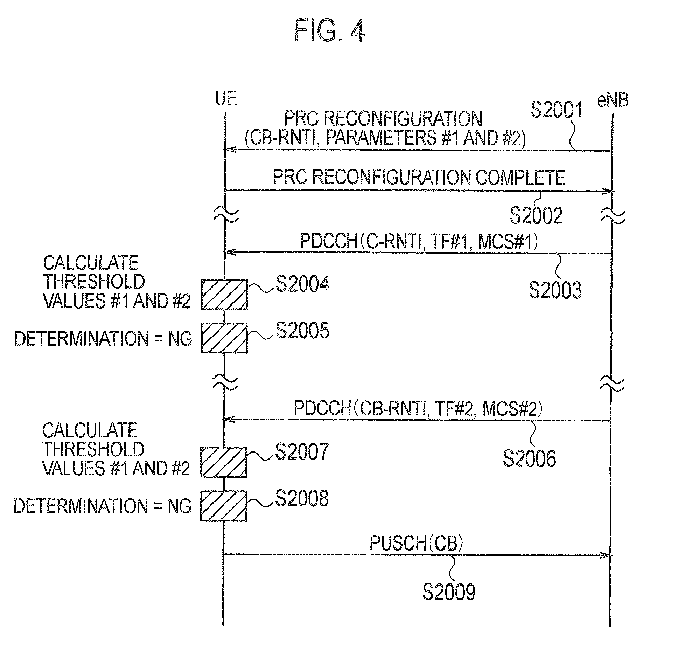

With reference to Fig. 3 and Fig. 4, the operation of the mobile communication system according to the first embodiment of the present invention will be described.

Firstly, as illustrated in Fig. 3, in step S1001, the radio base station eNB transmits the "RRC Reconfiguration (RRC massage)" to the mobile station UE, wherein the "RRC Reconfiguration" indicates the CB-RNTI receivable in the mobile station UE.

In addition, the radio base station eNB may designate parameters, which are necessary for calculating the above-described predetermined threshold value, by the "RRC Reconfiguration", to the mobile station UE.

In step S1002, the mobile station UE transmits "RRC Reconfiguration Complete" to the radio base station eNB.

In step S1010, the radio base station eNB transmits an uplink scheduling grant including CB-RNTI, TF, MCS, and the like via the PDCCH.

In step S1011, the mobile station UE calculates a predetermined threshold value based on the TF, the MCS, and the like which are included in the received uplink scheduling grant. Then, according to a comparison result obtained by comparing the calculated predetermined threshold value with the amount of uplink data remaining in the transmission buffer, the mobile station UE determines whether a protocol data unit formed by the uplink data can be transmitted using a shared uplink resource designated by the uplink scheduling grant.

When the determination result is "OK", the mobile station UE transmits an uplink data signal including a protocol data units, which formed by the above-described uplink data, to the radio base station eNB by using the shared uplink resource designated by the uplink scheduling grant via the PUSCH in step S1012.

Secondly, as illustrated in Fig. 4, in step S2001, the radio base station eNB transmits "RRC Reconfiguration (an RRC message)" to the mobile station UE, wherein the "RRC Reconfiguration" indicates CB-RNTI receivable by the mobile station UE.

In addition, the radio base station eNB may designate parameters #1 and #2, which are necessary for calculating threshold values #1 and #2, by the "RRC Reconfiguration", to the mobile station UE.

In step S2002, the mobile station UE transmits "RRC Reconfiguration Complete" to the radio base station eNB.

In step S2003, the radio base station eNB transmits an uplink scheduling grant including CB-RNTI, TF #1, MCS #1, and the like, via the PDCCH.

In step S2004, the mobile station UE calculates the threshold values #1 and #2 based on the TF #1, the MCS #1, the parameters #1 and #2, and the like which are included in the received uplink scheduling grant. In step S2005, according to a comparison result obtained by comparing the calculated threshold values #1 and #2 with the amount of uplink data remaining in the transmission buffer, the mobile station UE determines whether a protocol data unit formed by the uplink data can be transmitted using the shared uplink resource designated by the uplink scheduling grant.

When the determination result is "NG", the mobile station UE does not transmit the uplink data signal, which includes the protocol data units formed by the above-described uplink data, to the radio base station eNB by using the shared uplink resource designated by the uplink scheduling grant via the PUSCH.

Then, in step S2006, the radio base station eNB transmits again an uplink scheduling grant including CB-RNTI, TF #2, MCS #2, and the like, via the PDCCH.

In step S2007, the mobile station UE calculates the threshold values #1 and #2 based on the TF #1, the MCS #1, the parameters #1 and #2, and the like included in the received uplink scheduling grant. In step S2005, according to a comparison result obtained by comparing the calculated threshold values #1 and #2 with the amount of uplink data remaining in the transmission buffer, the mobile station UE determines whether a protocol data unit formed by the uplink data can be transmitted using the shared uplink resource designated by the uplink scheduling grant.

When the determination result is "OK", the mobile station UE transmits the uplink data signal, which includes the protocol data units formed by the above-described uplink data, to the radio base station eNB by using the shared uplink resource designated by the uplink scheduling grant via the PUSCH in step S2009.

(Operation and effect of mobile communication system according to first embodiment of present invention)
In the mobile communication system according to the first embodiment of the present invention, it is possible to omit useless padding in the protocol data unit constituting the uplink data signal transmitted using a shared resource, to reduce a probability of the collision of the uplink data signals, and to improve a transmission efficiency in the shared resource.

Furthermore, in the mobile communication system according to the first embodiment of the present invention, the radio base station eNB controls the predetermined threshold value to change assumed quality such as quality for the mobile station UE located at the end of a cell, quality for the mobile station UE located in the center of the cell, or quality for the mobile station UE located in the vicinity of the radio base station eNB, thereby controlling the number of resource blocks assigned by the uplink scheduling grant including the CB-RNTI, the TF, the MCS, and the like.

The characteristics of the present embodiment as described above may be expressed as follows.

A first characteristic of the present embodiment is summarized in that a mobile communication method includes: a step A in which the radio base station eNB transmits an uplink scheduling grant (an uplink scheduling signal) including CB-RNTI (predetermined identification information which is not identification information of a specific mobile station); and a step B in which when the uplink scheduling signal has been received, according to a comparison result obtained by comparing a predetermined threshold value with the amount of uplink data remaining in the transmission buffer, the mobile station UE determines whether a protocol data unit formed by the uplink data can be transmitted using a shared uplink resource designated by the uplink scheduling grant.

In the first characteristic of the present embodiment, in the step B, the mobile station UE may calculate the predetermined threshold value based on at least one of a transmission format designated by the uplink scheduling grant and a combination of a modulation scheme and a coding scheme.

In the first characteristic of the present embodiment, in the step B, only when the amount of the uplink data remaining in the transmission buffer is equal to or more than the predetermined threshold value, the mobile station UE may determine that the protocol data unit formed by the uplink data can be transmitted using the shared uplink resource.

In the first characteristic of the present embodiment, the predetermined threshold value includes a threshold value #1 (a first threshold value) and a threshold value #2 (a second threshold value). In the step B, only when the amount of the uplink data remaining in the transmission buffer is equal to or more than the threshold value #1 and is less than the threshold value #2, the mobile station UE may determine that the protocol data unit formed by the uplink data can be transmitted using the shared uplink resource.

In the first characteristic of the present embodiment, in the step B, only when the amount of padding in the protocol data unit formed by the uplink data remaining in the transmission buffer is smaller than the predetermined threshold value, the mobile station UE may determine that the protocol data unit can be transmitted using the shared uplink resource.

A second characteristic of the present embodiment is summarized in that the mobile station UE includes the determination unit 13 configured to, when an uplink scheduling grant including CB-RNTI is received from the radio base station eNB, determine whether a protocol data unit formed by uplink data can be transmitted using a shared uplink resource designated by the uplink scheduling grant, according to a comparison result obtained by comparing a predetermined threshold value with the amount of the uplink data remaining in the transmission buffer.

In the second characteristic of the present embodiment, the determination unit 13 may be configured to calculate the predetermined threshold value based on at least one of a transmission format designated by the uplink scheduling grant and a combination of a modulation scheme and a coding scheme.

In the second characteristic of the present embodiment, only when the amount of the uplink data remaining in the transmission buffer is equal to or more than the predetermined threshold value, the determination unit 13 may be configured to determine that the protocol data unit formed by the uplink data can be transmitted using the shared uplink resource.

In the second characteristic of the present embodiment, the predetermined threshold value includes a threshold value #1 and a threshold value #2. Only when the amount of the uplink data remaining in the transmission buffer is equal to or more than the threshold value #1 and is less than the threshold value #2, the determination unit 13 may be configured to determine that the protocol data unit formed by the uplink data can be transmitted using the shared uplink resource.

In the second characteristic of the present embodiment, only when the amount of padding in the protocol data unit formed by the uplink data remaining in the transmission buffer is smaller than the predetermined threshold value, the determination unit 13 may be configured to determine that the protocol data unit can be transmitted using the shared uplink resource.

It is noted that the operation of the above-described the radio base station eNB or the mobile station UE may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the radio base station eNB or the mobile station UE. Further, such a storage medium or a processor may be arranged, as a discrete component, in the radio base station eNB or the mobile station UE.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

## Claims

1. A mobile communication method comprising:
a step A in which a radio base station transmits an uplink scheduling signal including predetermined identification information which is not identification information of a specific mobile station; and
a step B in which when the uplink scheduling signal has been received, according to a comparison result obtained by comparing a predetermined threshold value with an amount of uplink data remaining in a transmission buffer, a mobile station determines whether a protocol data unit formed by the uplink data can be transmitted using a shared uplink resource designated by the uplink scheduling signal.

2. The mobile communication method according to claim 1, wherein
in the step B, the mobile station calculates the predetermined threshold value based on at least one of a transmission format designated by the uplink scheduling signal and a combination of a modulation scheme and a coding scheme.

3. The mobile communication method according to claim 1, wherein
in the step B, only when the amount of the uplink data remaining in the transmission buffer is equal to or more than the predetermined threshold value, the mobile station determines that the protocol data unit formed by the uplink data can be transmitted using the shared uplink resource.

4. The mobile communication method according to claim 1, wherein
the predetermined threshold value includes a first threshold value and a second threshold value, and in the step B, only when the amount of the uplink data remaining in the transmission buffer is equal to or more than the first threshold value and is less than the second threshold value, the mobile station determines that the protocol data unit formed by the uplink data can be transmitted using the shared uplink resource.

5. The mobile communication method according to claim 1, wherein
in step B, only when an amount of padding in the protocol data unit formed by the uplink data remaining in the transmission buffer is smaller than the predetermined threshold value, the mobile station determines that the protocol data unit can be transmitted using the shared uplink resource.

6. A mobile station comprising: a determination unit configured to, when an uplink scheduling signal including predetermined identification information that is not identification information of a specific mobile station is received from a radio base station, determine whether a protocol data unit formed by uplink data can be transmitted using a shared uplink resource designated by the uplink scheduling signal, according to a comparison result obtained by comparing a predetermined threshold value with an amount of the uplink data remaining in a transmission buffer.

7. The mobile station according to claim 6, wherein
the determination unit is configured to calculate the predetermined threshold value based on at least one of a transmission format designated by the uplink scheduling signal and a combination of a modulation scheme and a coding scheme.

8. The mobile station according to claim 6, wherein
only when the amount of the uplink data remaining in the transmission buffer is equal to or more than the predetermined threshold value, the determination unit is configured to determine that the protocol data unit formed by the uplink data can be transmitted using the shared uplink resource.

9. The mobile station according to claim 6, wherein
the predetermined threshold value includes a first threshold value and a second threshold value, and
only when the amount of the uplink data remaining in the transmission buffer is equal to or more than the first threshold value and is less than the second threshold value, the determination unit is configured to determine that the protocol data unit formed by the uplink data can be transmitted using the shared uplink resource.

10. The mobile station according to claim 6, wherein
only when an amount of padding in the protocol data unit formed by the uplink data remaining in the transmission buffer is smaller than the predetermined threshold value, the determination unit is configured to determine that the protocol data unit can be transmitted using the shared uplink resource.
